# EUROPÄISCHE PATENTSCHRIFT

(11) **EP 3 246 581 B1**
(45) Veröffentlichungstag und Bekanntmachung des Hinweises auf die Patenterteilung: **01.07.2020**
(21) Anmeldenummer: 17171294.6
(22) Anmeldetag: 16.05.2017
(51) Int. Cl.: F16B 11/00, F16B 47/00

(54) **HALTER ZUM BEFESTIGEN EINER SANITÄRKOMPONENTE AN EINER WAND**
HOLDER FOR FASTENING A SANITARY COMPONENT TO A WALL
SUPPORT DESTINÉ À FIXER UN ÉLÉMENT SANITAIRE SUR UNE PAROI

(30) Priorität: 18.05.2016 DE 102016006054
(43) Veröffentlichungstag der Anmeldung: 22.11.2017
(73) Patentinhaber: Grohe AG, 58675 Hemer (DE)
(72) Erfinder: Weiss, Martin, 58239 Schwerte (DE); Rützler, Anja, 58708 Menden (DE); Schwaan, Thomas, 58239 Schwerte (DE); Faust, Günter, 58730 Fröndenberg (DE)

(56) Entgegenhaltungen:
- WO-A1-2007/021170
- WO-A1-2016/184567
- US-A1- 2010 230 565

## Beschreibung

Die vorliegende Erfindung betrifft einen Halter zum Befestigen einer Sanitärkomponente an einer Wand. Mit solchen Haltern können insbesondere Accessoires, wie zum Beispiel Seifenspender, Papierhalter, Toilettenbürstengarnituren, (Kleider-)Haken etc., oder Brausestangen an Wänden von Sanitärräumen befestigt werden.

Bekannte Halter zum Befestigen von Sanitärkomponenten werden regelmäßig mit Schrauben an einer Wand befestigt. Problematisch ist häufig, dass Wände in Sanitärräumen mit Fliesen verkleidet sind, die durch die Verschraubung beschädigt werden können. Weiterhin ist die Befestigung von Haltern mit Klebestreifen oder Kleber bekannt, wodurch eine Beschädigung der Fliesen vermieden werden kann. Nachteilig hieran ist jedoch, dass die Verklebung häufig nicht die erforderliche Haltbarkeit erreicht und die Anwendung von Klebesystemen sehr aufwendig ist. Zur Gewährleistung einer hohen Klebekraft werden unter anderem Hybridkleber verwendet, die zur Aushärtung Feuchtigkeit bzw. Luftfeuchtigkeit benötigen. Es wurde daher bereits versucht in Haltern poröses Material einzusetzen, durch das Umgebungsluft an den Klebstoff gelangen kann. Dieses Material hat jedoch die Haftung des Klebstoffs an dem Halter reduziert, sodass die Verklebung hohen Qualitätsansprüchen häufig nicht genügen konnte.

WO 2007/021170 A1 beschreibt eine Vorrichtung zum Kleben eines Objektes auf ein Substrat.

Aufgabe der Erfindung ist daher, die mit Bezug auf den Stand der Technik geschilderten Probleme zumindest teilweise zu lösen und insbesondere einen Halter zum Befestigen einer Sanitärkomponente an einer Wand anzugeben, der einfach und ohne Beschädigung von Fliesen an einer Wand eines Sanitärraums befestigbar ist und der gleichzeitig eine besonders haltbare Verklebung ermöglicht.

Diese Aufgaben werden gelöst mit einem Halter gemäß den Merkmalen des unabhängigen Patentanspruchs. Weitere vorteilhafte Ausgestaltungen des Halters sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegeben Merkmale in der Beschreibung näher präzisiert und erläutert, wobei weitere bevorzugte Ausgestaltungen der Erfindung dargestellt werden.

Der Halter zum Befestigen einer Sanitärkomponente an einer Wand weist ein Gehäuse mit zumindest einer Kammer für zumindest eine Klebstoffkomponente auf, wobei die zumindest eine Klebstoffkomponente mittels eines mechanischen Stellglieds aus der zumindest einen Kammer herauspressbar ist, sodass die zumindest eine erste Klebstoffkomponente aus zumindest einer Öffnung des Gehäuses austritt, wobei die zumindest eine Öffnung in zumindest eine Aushärtekammer für die zumindest eine Klebstoffkomponente mündet und wobei die zumindest eine Aushärtekammer durch zumindest ein Gitter begrenzt wird, sodass beim Aushärten der zumindest einen Klebstoffkomponente in der zumindest einen Aushärtekammer Umgebungsluft durch das zumindest eine Gitter an die zumindest eine Klebstoffkomponente gelangt.

Der vorgeschlagene Halter dient insbesondere der Befestigung einer Sanitärkomponente an einer Wand. Bei einer solchen Sanitärkomponente kann es sich beispielsweise um Accessoires, wie zum Beispiel Seifenspender, Papierhalter, Toilettenbürstengarnituren, (Kleider-)Haken etc., und/oder Brausestangen handeln. Bei dem Halter kann es sich um ein separates Bauteil handeln, an dem die Sanitärkomponente befestigbar ist. Weiterhin kann der Halter aber auch einstückig mit der Sanitärkomponente ausgebildet sein. Der Halter weist ein (äußeres) Gehäuse auf, das insbesondere zumindest teilweise aus Metall oder Kunststoff besteht. Der Halter ist insbesondere mit einer Wandmontageeinrichtung ausgeführt. Die Wandmontageeinrichtung kann mindestens eine Bohrung für die Montage des Halters an die Wand mittels Schrauben, Clips und dergleichen umfassen. Die Wandmontageeinrichtung kann auch eine zu der Sanitärkomponente ausgerichtete, (insbesondere gegenüberliegende bzw. abgewandte) Anlagefläche hin zur Wand umfassen, die bevorzugt plan ist.

Zudem weist das Gehäuse insbesondere einen (innen liegenden) Hohlraum auf, in dem zumindest teilweise (bevorzugt vollständig) zumindest eine Kammer für zumindest eine Klebstoffkomponente, insbesondere eine erste Kammer für eine erste Klebstoffkomponente, eine zweite Kammer für eine zweite Klebstoffkomponente und/oder eine dritte Kammer für eine dritte Klebstoffkomponente, angeordnet ist. Bei der zumindest einen Klebstoffkomponente kann es sich insbesondere um einen Einkomponentenklebstoff mit einer einzigen Klebstoffkomponente, einem Zweikomponentenklebstoff mit einer ersten Klebstoffkomponente und zweiten Klebstoffkomponente oder um einen Dreikomponentenklebstoff mit einer ersten Klebstoffkomponente, zweiten Klebstoffkomponente und dritten Klebstoffkomponente handeln.

Im Falle eines Einkomponentenklebstoffs kann es sich insbesondere um einen Klebstoff auf Basis von silanmodifizierter Polymere (MS-Polymer, Hybrid-Polymer, STPU usw.) handeln. Solche Hybrid-Klebstoffe benötigen Feuchtigkeit bzw. Luftfeuchtigkeit zum Aushärten. Im Falle eines Zweikomponentenklebstoffs handelt es sich bei der ersten Klebstoffkomponente beispielsweise um Harz und bei der zweiten Klebstoffkomponente beispielsweise um einen Härter. Durch Vermischen der ersten Klebstoffkomponente und der zweiten Klebstoffkomponente wird eine Aushärtereaktion gestartet.

Die zumindest eine Klebstoffkomponente (und bevorzugt alle Klebstoffkomponenten) ist mittels (mindestens) eines mechanischen Stellglieds aus der zumindest einen Kammer herauspressbar, insbesondere in der Art, dass mit einer Bewegung des Stellglieds gleichzeitig alle Klebstoffkomponenten durch die zumindest eine Öffnung des Gehäuses (miteinander) in die zumindest eine Aushärtekammer eintreten. Bei dem mechanischen Stellglied kann es sich beispielsweise um eine Taste des Halters handeln, wobei durch Drücken der Taste die zumindest eine Klebstoffkomponente aus der zumindest einen Kammer herauspressbar ist. Durch das Herauspressen der zumindest einen Klebstoffkomponente tritt die zumindest eine Klebstoffkomponente, insbesondere alle Klebstoffkomponenten gemeinsam und/oder miteinander gemischt, aus der zumindest einen Öffnung (ggf. einer Lochplatte) des Gehäuses aus. Die zumindest eine Öffnung des Gehäuses mündet in die zumindest eine Aushärtekammer, in der die zumindest eine Klebstoffkomponente insbesondere einen Klebespalt (angrenzend zum Gehäuse) ausbildet, sodass die zumindest eine Klebstoffkomponente die zumindest eine Aushärtekammer zumindest teilweise ausfüllt. Hierdurch ist der Halter durch Betätigung des mechanischen Stellglieds besonders einfach an einer Wand befestigbar.

Die zumindest eine Aushärtekammer wird durch zumindest ein Gitter begrenzt, sodass beim Aushärten der zumindest einen Klebstoffkomponente in der zumindest einen Aushärtekammer Umgebungsluft durch das zumindest eine Gitter an die zumindest eine Klebstoffkomponente gelangt. Bei der zumindest einen Aushärtekammer handelt es sich um einen Bereich des Gehäuses, in dem die zumindest eine Klebstoffkomponente beim Ankleben des Halters an eine Wand aushärtet. Die zumindest eine Aushärtekammer grenzt daher nach der Montage des Halters unmittelbar an die Wand. In der zumindest einen Aushärtekammer wird somit vorzugsweise der Klebespalt ausgebildet. Die zumindest eine Aushärtekammer wird durch zumindest ein Gitter begrenzt, sodass beim Aushärten der zumindest einen Klebstoffkomponente in der zumindest einen Aushärtekammer Umgebungsluft durch das zumindest eine Gitter an die zumindest eine Klebstoffkomponente gelangt. Die Umgebungsluft enthält Feuchtigkeit, die insbesondere bei der Aushärtung von Einkomponentenklebstoffen erforderlich ist. Das zumindest eine Gitter ermöglicht somit eine Belüftung, sodass die Verwendung entsprechender Einkomponentenklebstoffe erst ermöglicht wird.

Zudem ist es vorteilhaft, wenn das zumindest eine Gitter mindestens 30 % einer Anlagefläche des Gehäuses zu der Wand überspannt. Bevorzugt ist, dass das zumindest eine Gitter mindestens 40 %, besonders bevorzugt mindestens 50 % einer Anlagefläche des Gehäuses zu der Wand überspannt. Damit wird gewährleistet, dass der zumindest einen Klebstoffkomponente beim Aushärten in der zumindest einen Aushärtekammer für eine zügige Aushärtung genügen Feuchtigkeit zur Verfügung steht.

Besonders vorteilhaft ist es, wenn das zumindest eine Gitter als Klebefläche für die zumindest eine Klebstoffkomponente dient. Dies bedeutet, dass die zumindest eine Klebstoffkomponente den Halter nach dem Aushärten der zumindest einen Klebstoffkomponente (auch) über das zumindest eine Gitter trägt. Hierbei kann die zumindest eine Klebstoffkomponente auch zumindest teilweise in das zumindest eine Gitter eintretet, sodass nach dem Aushärten der zumindest einen Klebstoffkomponente eine besonders feste Verbindung mit dem Halter entsteht.

Vorzugsweise weist eine Anlagefläche des Gehäuses zu der Wand zumindest ein Klebemittel zur Vorfixierung des Halters an der Wand auf. Bei dem Klebemittel kann es sich beispielsweise um eine (ringförmige) Klebefolie handeln, die den Halter an der Wand fixiert, bevor die zumindest eine Klebstoffkomponente ausgehärtet ist.

Darüber hinaus ist es vorteilhaft, wenn der Halter ein Befestigungsmittel zur Befestigung zumindest einer Kartusche aufweist, die zumindest teilweise die zumindest eine Kammer für die zumindest eine Klebstoffkomponente bildet. Bei dem Befestigungsmittel kann es sich beispielweise um ein Gewinde handeln, mit dem die Kartusche an das Gehäuse schraubbar ist.

Vorzugsweise weist das Befestigungsmittel zumindest einen Dorn auf. Bei dem Dorn handelt es sich insbesondere um ein Element des Gehäuses, dass den Verschluss der zumindest einen Kammer insbesondere beim Anbringen der Kartusche an dem Befestigungsmittel (automatisch) öffnet. Hierdurch kann ein Handkontakt mit der zumindest einen Klebstoffkomponente bei der Befestigung des Halters wirksam verhindert werden.

Des Weiteren ist es vorteilhaft, wenn das zumindest eine Gitter eine Mehrzahl von Gitterstrukturen aufweist, zwischen denen zumindest ein Lüftungsschlitz ausgebildet ist und wobei der zumindest eine Lüftungsschlitz eine Breite von maximal 1 mm aufweist. Der zumindest eine Lüftungsschlitz weist bevorzugt eine Breite von 0,3 mm (Millimeter) bis 0,7 mm auf. Eine solche Breite des zumindest einen Lüftungsschlitzes gewährleistet einerseits, dass sich die zumindest eine Klebstoffkomponente gleichmäßig in der zumindest einen Aushärtekammer verteilt, ohne dass ein wesentlicher Anteil der zumindest einen Klebstoffkomponente durch das zumindest eine Gitter aus der zumindest eine Aushärtekammer herausläuft, und andererseits, dass genügenden Umgebungsluft an die zumindest eine Klebstoffkomponente beim Aushärten gelangt.

Weiterhin ist es vorteilhaft, wenn sich der zumindest eine Lüftungsschlitz in Richtung der zumindest einen Aushärtekammer verjüngt. Dies hat den Vorteil, dass sich die zumindest eine Klebstoffkomponente nach ihrer Aushärtung keilartig in dem zumindest einen Gitter festsetzen kann, wodurch eine besonders stabile Verbindung entsteht.

Zudem ist es vorteilhaft, wenn das zumindest eine Gitter die zumindest eine Aushärtekammer in einer Tiefe der zumindest einen Aushärtekammer von maximal 1 mm begrenzt. Bevorzugt begrenzt das zumindest eine Gitter die zumindest eine Aushärtekammer in einer Tiefe der zumindest einen Aushärtekammer von 0,7 mm bis 0,9 mm. Hierdurch kann eine besonders hohe Festigkeit des Halters an der Wand erreicht werden.

Ebenfalls vorteilhaft ist es, wenn das Gehäuse eine erste Kammer für eine erste Klebstoffkomponente und eine zweite Kammer für eine zweite Klebstoffkomponente aufweist, wobei die erste Klebstoffkomponente und die zweite Klebstoffkomponente mittels des mechanischen Stellglieds aus der ersten Kammer und der zweiten Kammer herauspressbar sind, sodass die erste Klebstoffkomponente und die zweite Klebstoffkomponente aus der zumindest einen Öffnung des Gehäuses austreten.

Zudem ist es vorteilhaft, wenn die mindestens eine Öffnung an einer Anlagefläche des Gehäuses zu der Wand angeordnet ist. Die Anlagefläche des Gehäuses ist insbesondere diejenige Seite des Gehäuses, die nach der Befestigung des Halters mit in der Wand in Kontakt steht.

Ebenso ist es vorteilhaft, wenn es sich bei der zumindest einen Kammer um eine, insbesondere elastische, Klebepatrone handelt. Die zumindest eine Kammer kann zumindest teilweise aus einer Kunststofffolie gebildet sein. Die zumindest eine Klebstoffkomponente ist somit durch Druck des mechanischen Stellglieds auf die zumindest eine Kammer besonders einfach aus der zumindest einen Kammer herauspressbar.

Weiterhin ist es vorteilhaft, wenn die zumindest eine Kammer einen zumindest einen Verschluss aufweist. Der zumindest eine Verschluss ist insbesondere derart ausgebildet, dass dieser durch Druck des mechanischen Stellglieds auf die zumindest eine Kammer automatisch öffnet. Der zumindest eine Verschluss kann hierzu insbesondere Sollbruchstellen aufweisen, die ab einem bestimmten Druckniveau in der zumindest einen Kammer nachgeben.

Darüber hinaus ist es vorteilhaft, wenn das mechanische Stellglied zumindest teilweise in das Gehäuse hinein verstellbar ist. Das heißt mit anderen Worten z. B. auch, dass das Stellglied sich sowohl außerhalb als auch innerhalb des Gehäuses erstreckt, und mittels einer äußern Betätigung innen verlagert werden kann.

Zudem ist es vorteilhaft, wenn der Halter eine Mischkammer aufweist, in der die zumindest eine Klebstoffkomponente vor dem Austreten aus der mindestens einen Öffnung mischbar ist. In der Mischkammer können Mischstrukturen angeordnet sein, die eine möglichst vollständige Durchmischung der zumindest einen Klebstoffkomponente gewährleisten.

Ebenfalls vorteilhaft ist es, wenn der Halter einen Kanal aufweist, über den die zumindest eine Klebstoffkomponente nach dem Herauspressen aus der zumindest einen Kammer einem von außen sichtbaren Bereich des Gehäuses zuführbar sind, sodass ein Aushärten der zumindest einen Klebstoffkomponente prüfbar ist. Hierdurch wird eine Kontrolle des Aushärtevorgangs der zumindest einen Klebstoffkomponente nach deren Durchmischung ermöglicht. Insbesondere kann der Kanal die zumindest eine Klebstoffkomponente in Richtung beziehungsweise zu dem mechanischen Stellglied führen. Das mechanische Stellglied kann zudem zumindest teilweise transparent ausgebildet sein, sodass die zumindest eine Klebstoffkomponente durch das mechanische Stellglied von außen sichtbar ist. Zur Vereinfachung der Prüfung des Aushärtevorgangs können die zumindest eine Klebstoffkomponente derart ausgestaltet sein, dass diese beim Aushärten einer Farbveränderung unterliegen. Hierdurch kann durch eine Sichtkontrolle geprüft werden, ob der Kleber ausgehärtet ist.

Des Weiteren ist es vorteilhaft, wenn das Gehäuse an einer Anlagefläche zu der Wand einen Rücksprung zur Ausbildung eines Klebespalts zwischen dem Gehäuse und der Wand aufweist. Die zumindest eine Öffnung des Gehäuses mündet insbesondere in diesen Rücksprung, sodass die zumindest eine Klebstoffkomponente den Rücksprung nach der Verklebung zumindest teilweise ausfüllt.

Mit dem hier angeführten Halter lässt sich insbesondere für Accessoires und/oder Brausestangen ein Montageverfahren mit folgenden Schritten realisieren:
a) Anordnen mindestens eines hier vorgeschlagenen Halters an einer Wand,
b) Betätigen des Stellgliedes,
c) Gezieltes Applizieren der zumindest einen Klebstoffkomponente an der Wand, die an das Gehäuse angrenzt,
d) Ausbilden einer Verklebung, bei der Umgebungsluft durch zumindest ein Gitter an die zumindest eine Klebstoffkomponente gelangt,
e) Befestigen eines Accessoires und/oder einer Brausestange.

Die im Zusammenhang mit der Ausbildung und Funktion des hier vorgeschlagenen Halters genannten Aspekte - auch nachfolgend zu den Figuren - können zur Charakterisierung des Montageverfahrens gleichermaßen herangezogen werden.

Der Halter bildet insbesondere gegenüberliegend zu den Haltemitteln (Haken, Klammer, Fassung, etc.) die Verklebung aus.

Mittels Schritt c) können auch - insbesondere gleichzeitig - mehrere Klebstoffkomponenten appliziert werden.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine erste Ausführungsvariante des Halters in einer perspektivischen Darstellung;
- Fig. 2:: die erste Ausführungsvariante des Halters in einer perspektivischen Schnittdarstellung;
- Fig. 3:: eine zweite Ausführungsvariante des Halters in einer perspektivischen Darstellung;
- Fig. 4:: die zweit Ausführungsvariante des Halters in einer Teilansicht;
- Fig. 5:: die zweite Ausführungsvariante des Halters in einer Schnittdarstellung; und
- Fig. 6:: eine dritte Ausführungsvariante des Halters in einer perspektivischen Teilansicht.

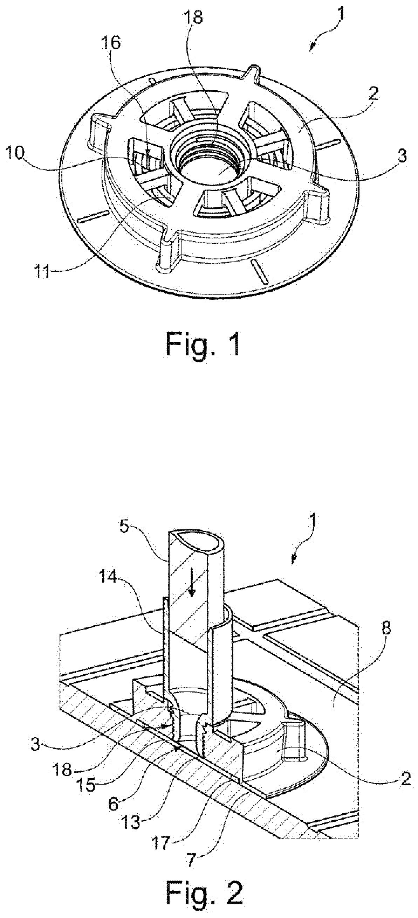

Die Fig. 1 zeigt eine erste Ausführungsvariante des Halters 1 zum Befestigen einer hier nicht gezeigten Sanitärkomponente an einer Wand 8 in einer perspektivischen Darstellung. Ein Gehäuse 2 des Halters 1 weist hier in einem zentralen Bereich eine Kammer 3 mit einem Befestigungsmittel 18 auf, bei dem es sich um ein Gewinde handelt. An dem Befestigungsmittel 18 ist, wie nachfolgend in der Fig. 2 gezeigt, eine Kartusche 14 befestigbar. Das Gehäuse 2 des Halters 1 weist zudem ein Gitter 16 mit Gitterstrukturen 11 und Lüftungsschlitzen 10 auf.

Die Fig. 2 zeigt die erste Ausführungsvariante des Halters 1 in einer perspektivischen Schnittdarstellung. Das Gehäuse 2 des Halters 1 liegt mit seiner Anklagefläche 7 an der Wand 8 an und ist mit einem ringförmigen Klebemittel 17, bei dem es sich hier um ein Klebeband handelt, an der Wand 8 vorfixiert. An dem Befestigungsmittel 18 des Gehäuses 2 ist eine Kartusche 14 mit einem mechanischen Stellglied 5 befestigt. Die Kartusche 14 bildet mit dem Gehäuse 2 die Kammer 3 für einen Einkomponentenklebstoff. Der Einkomponentenklebstoff kann mittels des mechanischen Stellglieds 5 aus der Kammer 3 durch eine Öffnung 6 in eine Aushärtekammer 15 zwischen der Wand 8 und dem Gehäuse 2 herausgepresst werden, wobei die Aushärtekammer 15 hier als Rücksprung 13 ausgebildet ist.

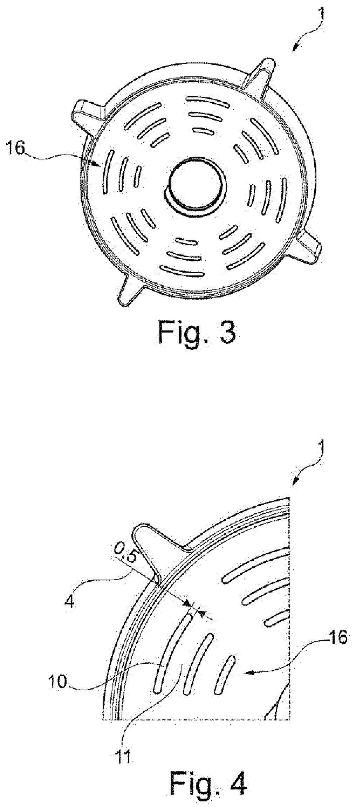

Die Fig. 3 zeigt eine zweite Ausführungsvariante des Halters 1 in einer perspektivischen Darstellung. Zu erkennen ist hier insbesondere das Gitter 16.

Die Fig. 4 zeigt die zweite Ausführungsvariante des Halters 1 in einer Teilansicht. Das Gitter 16 weist eine Mehrzahl von Gitterstrukturen 11 auf, zwischen denen Lüftungsschlitze 10 ausgebildet sind. Die Lüftungsschlitze 10 weisen hier eine Breite 4 von 0,5 mm auf.

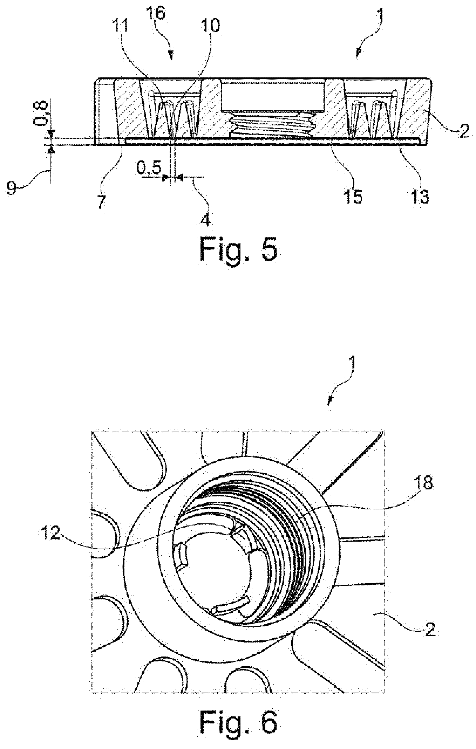

Die Fig. 5 zeigt die vierte Ausführungsvariante des Halters 1 in einer Schnittdarstellung. Auch hier wird noch einmal die Breite 4 der Lüftungsschlitze 10 zwischen den Gitterstrukturen 11 des Gitters 16 gezeigt. Weiterhin verjüngen sich die Lüftungsschlitze 10 in Richtung der Aushärtekammer 15. Die Aushärtekammer 15 wird durch die Gitterstrukturen 11 des Gitters 16 ausgehend von der Anlagefläche 7 des Gehäuses 2 in einer Tiefe 9 von 0,8 mm begrenzt.

Die Fig. 6 zeigt eine dritte Ausführungsvariante des Halters 1 in einer perspektivischen Teilansicht. Das Gehäuse 2 weist hier im Bereich des Befestigungsmittels 18 drei Dorne 12 auf, mit denen ein hier nicht gezeigter Verschluss 10 der Kartusche 14 beim Einsetzen in das Befestigungselement 18 automatisch geöffnet werden kann. Die dritte Ausführungsvariante des Halters 1 entspricht im Übrigen der zweiten Ausführungsvariante des Halters 1.

Der erfindungsgemäße Halter zeichnet sich durch eine leichte Befestigbarkeit ohne Beschädigung von Fliesen sowie eine hochfeste Klebeverbindung aus.

### Bezugszeichenliste

- 1: Halter
- 2: Gehäuse
- 3: Kammer
- 4: Breite
- 5: Mechanisches Stellglied
- 6: Öffnung
- 7: Anlagefläche
- 8: Wand
- 9: Tiefe
- 10: Lüftungsschlitz
- 11: Gitterstrukturen
- 12: Dorn
- 13: Rücksprung
- 14: Kartusche
- 15: Aushärtekammer
- 16: Gitter
- 17: Klebemittel
- 18: Befestigungsmittel

## Patentansprüche

1. Halter (1) zum Befestigen einer Sanitärkomponente an einer Wand (8), aufweisend ein Gehäuse (2) mit zumindest einer Kammer (3, 4) für zumindest eine Klebstoffkomponente, wobei die zumindest eine Klebstoffkomponente mittels eines mechanischen Stellglieds (5) aus der zumindest einen Kammer (3, 4) herauspressbar ist, sodass die zumindest eine Klebstoffkomponente aus zumindest einer Öffnung (6) des Gehäuses (2) austritt, wobei die zumindest eine Öffnung (6) in zumindest eine Aushärtekammer (15) für die zumindest eine Klebstoffkomponente mündet und wobei die zumindest eine Aushärtekammer (15) durch zumindest ein Gitter (16) begrenzt wird, sodass beim Aushärten der zumindest einen Klebstoffkomponente in der zumindest einen Aushärtekammer (15) Umgebungsluft durch das zumindest eine Gitter (16) an die zumindest eine Klebstoffkomponente gelangt.

2. Halter (1) nach Patentanspruch 1, wobei das zumindest eine Gitter (16) mindestens 30 % einer Anlagefläche (7) des Gehäuses (2) zu der Wand (8) überspannt.

3. Halter (1) nach einem der vorhergehenden Patentansprüche, wobei das zumindest eine Gitter (16) als Klebefläche für die zumindest eine Klebstoffkomponente dient.

4. Halter (1) nach einem der vorhergehenden Patentansprüche, wobei eine Anlagefläche (7) des Gehäuses (2) zu der Wand (8) zumindest ein Klebemittel (17) zur Vorfixierung des Halters (1) an der Wand (8) aufweist.

5. Halter (1) nach einem der vorhergehenden Patentansprüche, aufweisend ein Befestigungsmittel (18) zur Befestigung zumindest einer Kartusche (14), die zumindest teilweise die zumindest eine Kammer (3, 4) für die zumindest eine Klebstoffkomponente bildet.

6. Halter (1) nach Patentanspruch 5, wobei das Befestigungsmittel (18) zumindest einen Dorn (12) aufweist.

7. Halter (1) nach einem der vorhergehenden Patentansprüche, wobei das zumindest eine Gitter (16) eine Mehrzahl von Gitterstrukturen (11) aufweist, zwischen denen zumindest ein Lüftungsschlitz (10) ausgebildet ist und wobei der zumindest eine Lüftungsschlitz (10) eine Breite (12) von maximal 1 mm aufweist.

8. Halter (1) nach Patentanspruch 7, wobei sich der zumindest eine Lüftungsschlitz (10) in Richtung der zumindest einen Aushärtekammer (15) verjüngt.

9. Halter (1) nach einem der vorhergehenden Patentansprüche, wobei das zumindest eine Gitter (16) die zumindest eine Aushärtekammer (15) in einer Tiefe (9) der zumindest einen Aushärtekammer (15) von maximal 1 mm begrenzt.

10. Halter (1) nach einem der vorhergehenden Patentansprüche, wobei das Gehäuse (2) an einer Anlagefläche (7) zu der Wand (8) einen Rücksprung (13) zur Ausbildung eines Klebespalts zwischen dem Gehäuse (2) und der Wand (8) aufweist.

## Claims

1. A holder (1) for fastening a sanitary component to a wall (8), having a housing (2) with at least one compartment (3, 4) for at least one glue component, wherein the at least one glue component can be pressed out of the at least one compartment (3, 4) by means of a mechanical actuator (5) such that the at least one glue component exits from at least one opening (6) of the housing (2), wherein the at least one opening (6) opens into at least one curing compartment (15) for the at least one glue component and wherein the at least one curing compartment (15) is delimited by at least one grate (16) such that as the at least one glue component cures in the at least one curing compartment (15), ambient air reaches the at least one glue component through the at least one grate (16).

2. The holder (1) according to Claim 1, wherein the at least one grate (16) covers at least 30% of a contact surface (7) of the housing (2) with the wall (8).

3. The holder (1) according to any one of the preceding claims, wherein the at least one grate (16) serves as a bonding surface for the at least one glue component.

4. The holder (1) according to any one of the preceding claims, wherein a contact surface (7) of the housing (2) with the wall (8) has at least one bonding agent (17) for pre-attaching the holder (1) to the wall (8).

5. The holder (1) according to any one of the preceding claims, having a fastening means (18) for fastening at least one cartridge (14), which at least partially forms the at least one compartment (3, 4) for the at least one glue component.

6. The holder (1) according to Claim 5, wherein the fastening means (18) has at least one mandrel (12).

7. The holder (1) according to any one of the preceding claims, wherein the at least one grate (16) has a plurality of grate structures (11), between which at least one ventilation slot (10) is formed and wherein the at least one ventilation slot (10) has a maximum width (12) of 1 mm.

8. The holder (1) according to Claim 7, wherein the at least one ventilation slot (10) narrows toward the at least one curing compartment (15).

9. The holder (1) according to any one of the preceding claims, wherein the at least one grate (16) delimits the at least one curing compartment (15) to a depth (9) of the at least one curing compartment (15) of at most 1 mm.

10. The holder (1) according to any one of the preceding claims, wherein the housing (2) has a recess (13) with respect to a contact surface (7) with the wall (8) for forming a bonding gap between the housing (2) and the wall (8).

## Revendications

1. Support (1), destiné à fixer un élément sanitaire sur une paroi (8), comportant un boîtier (2) pourvu d'au moins un compartiment (3, 4) pour au moins un composant adhésif, l'au moins un composant adhésif étant susceptible d'être pressé au moyen d'un actionneur (5) mécanique hors de l'au moins un compartiment (3, 4), de sorte que l'au moins un composant adhésif s'échappe d'au moins un orifice (6) du boîtier (2), l'au moins un orifice (6) débouchant dans au moins un compartiment de solidification (15) pour l'au moins un composant adhésif et l'au moins un compartiment de solidification (15) étant délimité par au moins une grille (16), de sorte que lors de la solidification de l'au moins un composant adhésif dans l'au moins un compartiment de solidification (15), de l'air environnant arrive à travers l'au moins une grille (16) sur l'au moins un composant adhésif.

2. Support (1) selon la revendication 1, l'au moins une grille (16) recouvrant au moins 30 % d'une surface d'appui (7) du boîtier (2) sur la paroi (8).

3. Support (1) selon l'une quelconque des revendications précédentes, l'au moins une grille (16) faisant office de surface de collage pour l'au moins un composant adhésif.

4. Support (1) selon l'une quelconque des revendications précédentes, une surface d'appui (7) du boîtier (2) sur la paroi (8) comportant au moins un agent adhésif (17) pour la fixation préalable du support (1) sur la paroi (8).

5. Support (1) selon l'une quelconque des revendications précédentes, comportant un moyen de fixation (18), destiné à fixer au moins une cartouche (14), qui forme au moins en partie l'au moins un compartiment (3, 4) pour l'au moins un composant adhésif.

6. Support (1) selon la revendication 5, le moyen de fixation (18) comportant au moins une broche (12).

7. Support (1) selon l'une quelconque des revendications précédentes, l'au moins une grille (16) comportant une pluralité de structures grillagées (11), entre lesquelles est conçue au moins une fente d'aération (10) et l'au moins une fente d'aération (10) présentant une largeur (12) d'un maximum de 1 mm.

8. Support (1) selon la revendication 7, l'au moins une fente d'aération (10) rétrécissant dans la direction de l'au moins un compartiment de solidification (15).

9. Support (1) selon l'une quelconque des revendications précédentes, l'au moins une grille (16) délimitant l'au moins un compartiment de solidification (15) dans une profondeur (9) de l'au moins un compartiment de solidification (15) d'un maximum de 1 mm.

10. Support (1) selon l'une quelconque des revendications précédentes, sur une surface d'appui (7) sur la paroi (8), le boîtier (2) comportant un retrait (13) pour la création d'un interstice de collage entre le boîtier (2) et la paroi (8).
